# EUROPEAN PATENT SPECIFICATION

(11) **EP 2 809 169 B1**
(45) Date of publication and mention of the grant of the patent: **10.04.2019**
(21) Application number: 13703984.8
(22) Date of filing: 01.02.2013
(51) Int. Cl.: A23C 19/082, A23C 19/084

(54) **DAIRY PRODUCTS WITH ADDED DAIRY MINERALS AND METHODS OF PRODUCING DAIRY PRODUCTS WITH ADDED DAIRY MINERALS**
MILCHPRODUKTE MIT ZUSÄTZLICHEN MILCHMINERALIEN UND VERFAHREN ZUR HERSTELLUNG VON MILCHPRODUKTEN MIT ZUSÄTZLICHEN MILCHMINERALIEN
PRODUITS LAITIERS CONTENANT DES MINÉRAUX LAITIERS AJOUTÉS ET PROCÉDÉS DE PRODUCTION DE PRODUITS LAITIERS CONTENANT DES MINÉRAUX LAITIERS AJOUTÉS

(30) Priority: 01.02.2012 US 201261593639 P; 09.08.2012 US 201213570808
(43) Date of publication of application: 10.12.2014
(73) Proprietor: Kraft Foods Group Brands LLC, Northfield, IL 60093 (US)
(72) Inventor: CRIEZIS, Anthony William, Chicago, Illinois 60640 (US); CAMPBELL, Bruce Edward, Glenview, Illinois 60025 (US); DIERBACH, Lisa Ann, Arlington Heights, Illinois 60004 (US); KNIGHT, Timothy David, Sun Prairie, Wisconsin 53590 (US); LI, Hui-Chen, San Jose, CA 95123 (US)
(74) Representative: Hoffmann Eitle
(86) International application number: PCT/US2013/024309
(87) International publication number: WO 2013/116621

(56) References cited:
- EP-A1- 1 884 165
- EP-A2- 1 138 207
- US-A- 6 007 852
- US-A1- 2003 165 574
- US-A1- 2008 081 087
- Souce et al.: "Food Composition and Nutrition Tables", 2000, medpharm / CRC Press, XP002695641, pages 12,131-13, the whole document
- Volostnikova: "Mineral composition of 'Osobyi' processed cheese.", Problemy kachestva i biologicheskoi tsennosti pishchevykh produktov, 1979, pages 190-193, XP055060138, Retrieved from the Internet: URL:http://eolit.internal.epo.org/edo/day1 7/XP008161502.PDF [retrieved on 2013-04-18]

## Description

### TECHNICAL FIELD

The present invention relates to dairy products, and more specifically, to cream cheese, including added dairy minerals, and methods for producing the same.

### BACKGROUND

During the production of various dairy products, such as cream cheese and processed cheese, dairy starting materials are subjected to a variety of treatments that can adversely affect the flavor of the end products.

Processes for making cream cheese or other cultured cheese products often include a concentration step in which certain components of the milk are removed. For instance, cream cheese is a soft, mild acid-coagulated uncured cheese typically made from a mixture of cream and milk. In typical cream cheese processes, curd is separated from liquid whey by centrifugation or other technique. Minerals and other components from the dairy starting materials are lost in the liquid whey.

Other treatments often used in cheese-making processes include thermal processing steps to increase their shelf stability by rendering them microbiologically safe. Thermal treatment of dairy materials, such as milk, cream, dairy protein sources, and other dairy fat sources often used in cheese-making processes, can result in development of off flavors. The off flavors include "cooked milk" type flavors which can lead to loss of fresh milk impression. Heating milk to high temperatures can result in an unsightly brown color due to Maillard reactions between the lactose and proteins in the milk.

Processed cheeses are typically prepared by forming a blend of one or more comminuted natural cheeses and/or other dairy fat and protein sources. Processed cheese is conventionally prepared by grinding and/or mixing while heating one or more varieties of milk-fat containing natural cheeses, such as, for example, Cheddar cheese, Colby cheese, Swiss cheese, Brick cheese, Muenster cheese, pasta filata cheese, washed curd, and granular curd cheese. Various additives, such as whey or emulsifying salts, may also be included. The processed cheeses are typically produced by heating, melting, and mixing the ingredients to form a homogenous, emulsified molten mass. The mass is then cooled and solidified to form the processed cheese.

The various treatments and steps in the processes for making these dairy products and processed cheese products often result in flavors that consumers associate with processed foods.

Souce et al., "Food Composition and Nutrition Tables", 2000, medpharm/CRC Press, pp. 12,131,132, discloses the nutritional composition of cow's milk (whole milk, raw milk), processed cheese (45% fat content in dry matter) and processed cheese (60% fat content in dry matter).

EP 1884 165 A1 describes a method of making a nutritionally fortified process cheese product comprising combining, as a mixture, an emulsified homogenous cheese composition and magnesium phosphate in an amount effective for forming a magnesium-fortified cheese product.

### SUMMARY

In modern times, dairy and cheese products are no longer necessarily produced for local consumption. As manufacture, transport, and sale at retailers necessitate that products be consumed after longer periods of storage after production, opportunities to further improve the flavor of the dairy products would be highly desirable.

The methods and products disclosed herein relate to cream cheese as a dairy product containing added dairy minerals. It was surprisingly and unexpectedly found that adding dairy minerals in controlled amounts to cheese-making processes provided cream cheese as a dairy product with milk flavor notes characteristic of fresh dairy products. As used herein, the term " dairy minerals" refers to minerals or mineral-containing ions naturally found in dairy liquids, such as cow's milk. Exemplary dairy minerals include, for example, potassium, magnesium, calcium, and phosphate ions.

A dairy product fortified with dairy minerals is provided where the dairy product is a cream cheese and comprises a dairy base and dairy minerals. The dairy minerals are included in an amount effective to provide a particular ratio of minerals to protein in the cheese product. The ratios of minerals to protein include the total amount of minerals and total amount of protein in the cheese product (i.e., including those coming from all ingredients of the dairy product as well as the added minerals). The dairy product is cream cheese. The dairy base comprises at least one of milk, cream, milk protein concentrate, whey protein concentrate, milk fat, and cheese.

In one aspect, the dairy minerals are included in cream cheese in an amount of 0.0204 mg to 0.0212 mg potassium per mg protein, in another aspect 0.0207 mg to 0.0212 mg potassium per mg protein, and in yet another aspect 0.0209 mg to 0.0212 mg potassium per mg protein.

The dairy minerals are included in cream cheese in an amount of 0.0024 mg to 0.0038 mg magnesium per mg protein, in one aspect 0.0030 mg to 0.0038 mg magnesium per mg protein, and in another aspect 0.0036 to 0.0038 mg magnesium per mg protein.

The dairy minerals are included in cream cheese in an amount of 0.0282 mg to 0.0505 mg calcium per mg protein, in one aspect 0.0348 mg to 0.0505 mg calcium per mg protein, and in another aspect 0.0397 to 0.0505 mg calcium per mg protein.

In another aspect, the dairy minerals are included in cream cheese in an amount of 0.0608 mg to 0.0937 mg phosphate per mg protein, in another aspect 0.0762 mg to 0.0937 mg phosphate per mg protein, and in yet another aspect 0.0918 to 0.0937 mg phosphate per mg protein.

The dairy minerals are included in an amount to provide the cream cheese with at least calcium and magnesium in the described amounts. In one approach, the dairy minerals are included in an amount to provide the cream cheese with at least three of the dairy minerals listed above, including magnesium and calcium, in the described amounts. In another approach, the dairy minerals are included in an amount to provide the cream cheese with all of potassium, calcium, phosphate, and magnesium in the described amounts.

By another approach, a method of preparing a cream cheese as a dairy product fortified with dairy minerals is provided. The method generally comprises adding a dairy mineral composition to a dairy component in an amount effective to provide a final dairy product comprising dairy minerals in specific amounts relative to the protein content. The dairy mineral composition includes at least magnesium and calcium. In one aspect, the dairy mineral composition includes at least three of potassium, magnesium, calcium, and phosphate, including magnesium and calcium. In another aspect, the dairy mineral composition comprises potassium, magnesium, calcium, and phosphate. The dairy product is a cream cheese and the dairy base comprises at least one of milk, cream, milk protein concentrate, whey protein concentrate, milk fat, and cheese.

The dairy minerals are provided in dairy products in amounts in addition to those naturally present in the dairy products. The addition of dairy minerals was found to be particularly suitable for cream cheese. Further, for cheese-making processes involving a whey separation step, it was found that the addition of dairy minerals in amounts and ratios of specific minerals not equivalent to the amount and ratios of minerals lost in the whey separation step provides a cheese product having improved flavor attributes. It was also found that dairy products prepared without a whey separation step have improved flavor after dairy mineral addition.

It has been discovered that dairy mineral ingredients having different mineral and lactose contents can provide different flavor profiles to the mineral fortified dairy product so dairy mineral ingredients having greater or lesser quantities of particular minerals may be desired in a particular application or product type. By one aspect, it has been found that dairy mineral powders having increased calcium content in proportion to other minerals in the blend are particularly advantageous for providing fresh dairy flavor notes to a dairy product. In some approaches, low lactose dairy mineral powders, such as TRUCAL® D7 and OPTISOL™ 1200 from Glanbia PLC, may be advantageous for concentrated dairy liquid applications,. In another aspect, the dairy minerals may be sourced from a liquid milk permeate stream containing dairy minerals that has been concentrated and dried into a powder form that can be easily stored for an extended period of time. As used herein, "low lactose" means less than 10 percent lactose by weight of the dairy mineral composition. Low lactose dairy mineral ingredients may be preferred in some applications because lactose can contribute to generation of off flavors during heating. Higher amounts of lactose may be acceptable in cheese applications, so long as the lactose does not provide an overly sweet taste or other off flavor to the cheese.

The dairy minerals are added to the dairy products to provide a particular ratio of dairy minerals to total protein. By total protein is meant the total amount of protein included in the dairy product. Casein and whey are typically the predominant proteins found in cow milk and therefore any dairy products including dairy liquids or dairy proteins derived from cow milk.

By one approach, the dairy minerals are added to the dairy products in an amount of 0.2 to 1 percent, in another aspect 0.3 to 0.8 percent, in another aspect 0.4 to 0.7 percent by weight of the dairy product.

### BRIEF DESCRIPTION OF THE DRAWINGS

FIG. 1A-E includes charts showing release of sulfur compounds from the processed cheese of Comparative Example 3 (cold application);
FIG. 2A-E includes charts showing release of sulfur compounds from the processed cheese of Comparative Example 3 (hot application);
FIG. 3A-F includes charts showing release of free fatty acids and buttery compounds from the processed cheese of Comparative Example 3 (cold application);
FIG. 4A-F includes charts showing release of free fatty acids and buttery compounds from the processed cheese of Comparative Example 3 (hot application);
FIG. 5A-E includes charts showing release of lactones and unsaturated aldehydes from the processed cheese of Comparative Example 3 (cold application);
FIG. 6A-E includes charts showing release of lactones and unsaturated aldehydes from the processed cheese of Comparative Example 3 (hot application);
FIG. 7A-E includes charts showing release of sulfur compounds from the cream cheese of Example 4;
FIG. 8A-E includes charts showing release of free fatty acids and buttery compounds from the cream cheese of Example 4;
FIG. 9A-E includes charts showing release of methyl ketones and unsaturated aldehydes from the cream cheese of Example 4; and
FIG. 10 includes confocal microscopy images of the Kraft 2% Milk White American Singles cheese product of Comparative Example 7.

### DETAILED DESCRIPTION

The methods and products disclosed herein relate to cream cheese as a dairy product containing added dairy minerals. It was surprisingly and unexpectedly found that adding dairy minerals in controlled amounts to cheese-making processes provided solid dairy products with milk flavor notes characteristic of fresh dairy products. By "solid," is meant that the dairy product is not a flowable or liquid product at refrigerated temperature (e.g., 4°C (40°F)). As used herein, the term "dairy minerals" refers to minerals or mineral-containing ions naturally found in dairy liquids, such as cow's milk. Exemplary dairy minerals include, for example, potassium, magnesium, calcium, and phosphate ions. The dairy minerals are provided in dairy products in amounts in addition to those naturally present in the dairy products. The addition of dairy minerals was found to be particularly suitable for cream cheese. Further, for cheese-making processes involving a whey separation step, it was found that the addition of dairy minerals in amounts and ratios of specific minerals not equivalent to the amount and ratios of minerals lost in the whey separation step provides a cheese product having improved flavor attributes. It was also found that dairy products prepared without a whey separation step have improved flavor.

While the mineral content of raw milk, such as cow's milk, varies due to a variety of factors, the most abundant minerals and ions in a typical raw milk product are citrate (176 mg/100g), potassium (140 mg/100g), calcium (117.7 mg/100g), chloride (104.5 mg/100g), phosphorus (95.1 mg/100g), sodium (58 mg/100g), and magnesium (12.1 mg/100g). According to the present disclosure, the dairy minerals are added to the dairy products to provide total amounts of specific minerals and ratios of specific minerals not naturally found in raw milk and therefore also not found in dairy products made with ingredients prepared from milk-derived dairy liquids.

The form of the dairy minerals included in the dairy products is not particularly limiting. For example, the dairy minerals may be in the form of a liquid, powder, gel, emulsion, or the like and can be obtained from a variety of milk products, milk derivatives, or dairy processes. For example, ultra-filtered or nano-filtered dairy permeate, such as whey permeate obtained in conventional cheese-making processes, can be used as a source of milk minerals. The filtered milk permeates can be concentrated to reduce water content and used in the form of a liquid or powder. If desired, the concentrated permeates can be further treated to increase the content of particular minerals and/or to reduce the quantity of lactose or lactic acid.

By one approach, the dairy minerals are added to the dairy products in an amount of 0.2 to 1 percent, in another aspect 0.3 to 0.8 percent, in another aspect 0.4 to 0.7 percent by weight of the dairy product. By one approach, the dairy minerals used is a commercially available product listed below:

Content of Commercially Available Ingredients Containing Dairy Minerals

| **Manufacturer** | **Ingredient Name** | **Base** | **Moisture (%)** | **Protein (%)** | **Lipid (%)** | **Ash (%)** | **Lactose (%)** | **Ca (%)** | **P (%)** | **Na (%)** | **Mg (%)** | **K (%)** | **Fe (%)** |
|---|---|---|---|---|---|---|---|---|---|---|---|---|---|
| Lactalis | Calciane | Whey | 4.62 | 1.23 | <0.1 | 79.84 | <6 | 29.3 | 16 | 0.3 | 1.5 | 0.25 | |
| Lactalis | Calciane micronized | Whey | 3.52 | 1.41 | <0.1 | 81.38 | | 29.68 | 16 | 0.3 | 1.5 | 0.25 | |
| Glanbia | TRUCAL® D7 | Milk | <6 | <7 | <0.5 | ∼78 | <10 | 24.8 | 14 | 0.62 | 1.4 | 0.7 | 0.0013 |
| Glanbia | OPTISOL™ 1200 | Whey | 3.42 | 4.24 | <0.5 | ∼78 | <10 | 24.8 | 14.4 | 0.62 | 1.4 | 0.7 | 0.0013 |
| Idaho milk | IdaPro MPP | Milk | 1.83 | 3.46 | <0.1 | 7.68 | 87.03 | 0.36 % | 0.57 | 0.38 | 0.1 | 1.9 | 0.0003 |
| Lactalis | Whey permeate powder | Whey | 2.80 | 4.11 | 0.04 | 8.45 | 84.6 | 0.32 | 0.59 | 0.64 | | 2.37 | <0.1 |

In one aspect, the dairy minerals are included in cream cheese in an amount of 0.0204 mg to 0.0212 mg potassium per mg protein, in another aspect 0.0207 mg to 0.0212 mg potassium per mg protein, and in yet another aspect 0.0209 mg to 0.0212 mg potassium per mg protein.

The dairy minerals are included in cream cheese in an amount of 0.0024 mg to 0.0038 mg magnesium per mg protein, in one aspect 0.0030 mg to 0.0038 mg magnesium per mg protein, and in another aspect 0.0036 to 0.0038 mg magnesium per mg protein.

The dairy minerals are included in cream cheese in an amount of 0.0282 mg to 0.0505 mg calcium per mg protein, in one aspect 0.0348 mg to 0.0505 mg calcium per mg protein, and in another aspect 0.0397 to 0.0505 mg calcium per mg protein.

In another aspect, the dairy minerals are included in cream cheese in an amount of 0.0608 mg to 0.0937 mg phosphate per mg protein, in another aspect 0.0762 mg to 0.0937 mg phosphate per mg protein, and in yet another aspect 0.0918 to 0.0937 mg phosphate per mg protein.

The dairy minerals are included in an amount to provide the cream cheese with at least calcium and magnesium in the described amounts. In one approach, the dairy minerals are included in an amount to provide the cream cheese with at least three of the dairy minerals listed above, including magnesium and calcium, in the described amounts. In yet another approach, the dairy minerals are included in an amount to provide the cream cheese with all of potassium, calcium, phosphate, and magnesium in the described amounts. Any combinations of these ratios and ranges for the various minerals may be combined.

It was further discovered that fortification with a single dairy mineral is generally insufficient to provide the flavor benefits. A mixture of magnesium and calcium , in one aspect at least three dairy minerals including magnesium and calcium, is generally needed to provide fresh dairy flavor notes to the dairy product. In one aspect, the dairy minerals added to the dairy product include at least two of potassium, magnesium, calcium, and phosphate. In another aspect, the dairy minerals added to the dairy product include at least three of potassium, magnesium, calcium, and phosphate. In another aspect, the dairy minerals added to the dairy product include all of potassium, magnesium, calcium, and phosphate.

It has been discovered that dairy mineral ingredients having different mineral and lactose contents can provide different flavor profiles to the mineral fortified dairy product so dairy mineral ingredients having greater or lesser quantities of particular minerals may be desired in a particular application or product type. By one aspect, it has been found that dairy mineral powders having increased calcium content in proportion to other minerals in the blend are particularly advantageous for providing fresh dairy flavor notes to a dairy product. In some approaches, low lactose dairy mineral powders may be advantageous for concentrated dairy liquid applications, such as TRUCAL® D7 and OPTISOL™ 1200 from Glanbia PLC. In another aspect, the dairy minerals may be sourced from a liquid milk permeate stream containing dairy minerals that has been concentrated and dried into a powder form that can be easily stored for an extended period of time. As used herein, "low lactose" means less than 10 percent lactose by weight of the dairy mineral composition. Low lactose dairy mineral ingredients may be preferred in some applications because lactose can contribute to generation of off flavors during heating. Higher amounts of lactose may be acceptable in cheese applications, so long as the lactose does not provide an overly sweet taste or other off flavor to the cheese.

The dairy minerals are added to the dairy products to provide a particular ratio of dairy minerals to total protein. By total protein is meant the total amount of protein included in the dairy product. Casein and whey are typically the predominant proteins found in cow milk and therefore any dairy products including dairy liquids or dairy proteins derived from cow milk.

In some aspects, dairy products to which the dairy minerals have been added are characterized by reduced astringency compared to otherwise identical dairy products that do not include added dairy minerals. Dairy products often have astringent flavor as a result of high protein content, low fat content, and/or low pH. In other aspects, dairy products to which the dairy minerals have been added are characterized by less sourness than an otherwise identical dairy product that does not include added dairy minerals. Dairy products often have sour flavor due to low pH. In yet other aspects, dairy products to which the dairy minerals have been added are characterized by increased creamy or buttery flavor that is desirable in many dairy products.

While not wishing to be bound by theory, it is presently believed that the flavor profile of the dairy products to which the dairy minerals are added is altered by interaction of the dairy minerals with other components of the dairy product, particularly casein. It is further believed that these interactions affect the rate of flavor release, thereby changing flavor perception when the dairy product is consumed. For cream cheese applications, it has been found that the rate of flavor release is reduced by the addition of dairy minerals. The altered flavor release impacts the flavor profile perceived by the consumer. For instance, delaying the release of buttery flavors is often perceived as a desirable lingering buttery dairy flavor rather than an upfront buttery flavor that fades quickly when the dairy product is consumed.

While not wishing to be limited by theory, it is presently believed that the added dairy minerals interact with the casein proteins in the dairy products, which changes the microstructure of the product and results in altered release of flavors in the dairy product. The change in microstructure may also function to trap flavors in the product during the manufacturing process.

### Incorporation of Dairy Minerals into Dairy Products

The dairy products in the present invention are cream cheese.

Cream cheese is stored under refrigeration conditions and has a smooth and butter-like consistency. The texture and body of cream cheese at refrigeration temperatures is such that the cream cheese can be sliced and/or spread. Cream cheese-like spreads are products which may not meet all standards of identity for cream cheese but have many of the functional properties of cream cheese. As used herein, the term "cream cheese" refers to traditional-type cream cheese products (e.g., cream cheese processes involving separation of curds and whey), cream cheese products made without separation of curds and whey, and imitation cream cheese products (e.g., cream cheese products including non-dairy fats, such as vegetable oil).

Exemplary cream cheese-making processes are described in U.S. Patent No. 7,687,095, U.S. Patent No. 7,655,267, U.S. Patent No. 7,611,743, U.S. Patent No. 6,406,736, and U.S. Publication No. 2009/0297660. In traditional processes for making cream cheese, a dairy base is prepared, such as uncultured whole milk and/or skim milk and sweet cream. The dairy base is pasteurized and homogenized, after which it is cooled, usually to a temperature between 16.7 to 43°C, and is then inoculated with a cream cheese culture, such as a lactic-acid forming culture. Conventionally, a cream and milk mixture is cultured with lactic acid-forming bacteria to convert lactose in the mixture to lactic acid. The culturing continues until the pH drops sufficiently to form a curd. The curd is separated from the whey and processed to form cream cheese.

In newer processes, dairy ingredients, such as milk protein concentrate, whey protein concentrate, and cheese whey, both in dried powder form or in concentrated liquid form, are cultured to the desired pH and then dairy fat (such as cream and/or milkfat) or non-dairy fat (such as soybean or sunflower oil) is added and the mixture is processed to form a cream cheese spread or imitation cream cheese spread, respectively, without a curd separation step. These processes are commonly referred to as "wheyless processes" meaning that whey is not separated or removed and the whey remains in the resulting cream cheese product.

Alternatively, direct addition of an acidulant, such as lactic acid or glucono-delta-lactone, may be used in place of culturing. Hybrid processes incorporate optional dairy ingredients ("ODI") into conventional processes. The term "optional dairy ingredient" is defined in 21 C.F.R. § 133.124(d) as "Cream, milk, skim milk, buttermilk, cheese whey, any of the foregoing from which part of the water has been removed, anhydrous milkfat, dehydrated cream, skim milk cheese for manufacturing, and albumin from cheese whey." In these processes, additional ingredients, including salt and stabilizers, are typically added.

By one exemplary approach, a method for preparing a cream cheese product comprises: (a) heating a dairy base; (b) homogenizing the dairy base to form a homogenized mixture; (c) heating the homogenized mixture to a setting temperature of 17 to 33°C (62 to 92° F); (d) adding a cream cheese culture to the homogenized mixture; (e) incubating the mixture of step (d) for a period of 8 to 20 hours; (f) if necessary, adjusting the pH of the to achieve a pH of 4.6 or less, such as by adding an edible acid (e.g., citric acid, acetic acid, lactic acid, malic acid, fumaric acid, tartaric acid, hydrochloric acid, sulfuric acid, phosphoric acid, and combinations thereof) to form curds and whey; (g) separating the curds from the whey; (e) optionally adding stabilizer to the separated curds to form a cream cheese mixture; and (f) homogenizing the cream cheese mixture to form the final cream cheese product. The final cream cheese product can then be packaged using conventional techniques, including, for example, cold or hot packing techniques. The final cream cheese product may be in the form of a cream cheese "brick" or in a softer form more typically sold in plastic containers.

[0066][0055] The dairy minerals can be added at a variety of different points in the process. For example, the dairy minerals can be added when adding the cream cheese culture in step (d); during incubation step (e), or after the pH-adjustment step (f). If the dairy minerals are added prior to the separation of curds and whey, a higher amount of dairy minerals should be added initially because a portion of the dairy minerals will be lost in the separated whey. As will be understood to one of ordinary skill in the art, the order of the steps in the processes described herein can be modified and still obtain a satisfactory cream cheese product. Additional steps can also be used, if desired.

In some aspects, the dairy base includes a combination of raw milk and cream. Other dairy liquids may also be included in the dairy base, if desired. Protein sources may also be included in the dairy base, including for example milk protein concentrate and whey protein concentrate.

Stabilizers suitable for inclusion in the cream cheese product include, for example, gums, salts, emulsifiers, and mixtures thereof. Suitable gums include, for example, xanthan gum, locus bean gum, guar gum, and carrageenan, as well as mixtures thereof. Suitable salts include, for example, sodium chloride, and other edible salts, as well as mixtures thereof. Suitable emulsifiers include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, and sodium acid pyrophosphate, as well as mixtures thereof. The moisture content of the cream cheese is controlled by the amount of water added to the formulation; if necessary, it can be further adjusted by evaporation or the addition of more water.

Advantages and embodiments of the concentrated dairy liquids described herein are further illustrated by the following examples; however, the particular conditions, processing schemes, materials, and amounts thereof recited in these examples, as well as other conditions and details, should not be construed to unduly limit this method. All percentages are by weight unless otherwise indicated.

### EXAMPLES

### Example 1

A series of three stir-in tests was conducted to analyze the impact of adding dairy minerals to cream cheese having varying fat content (24 percent fat, 14 percent fat, and 10 percent fat). For each experiment, a recently made cream cheese base was heated to about 21°C (70°F) and dairy mineral powder (Glanbia TRUCAL®D7) was hand stirred into the base. The resulting cream cheese products were then cooled to refrigeration temperatures of below 7°C (45°F). After a period between 1 day to two weeks, the samples were removed from the refrigerator and evaluated by an expert team tasting panel. In all experiments, the samples made with added dairy minerals included a decrease in astringency and sourness and an increase in milky and cheesy flavor. The largest differences between control and samples with added dairy minerals were found in the 10 percent fat product.

### Cream Cheese with 24% Fat

In the first experiment, dairy minerals were added to cream cheese having 24 percent fat. The cream cheese was prepared by mixing 29.1 percent cream and 70.9 percent milk. The mixture was treated with a lactic acid culture and processed according to conventional cream cheese techniques to provide a curd. The curd (99.03 percent) was combined with 0.17 percent carob gum and 0.8 percent salt and processed to produce the cream cheese. The cream cheese included 24.0 percent fat, 34.7 percent total solids, 0.92 percent salt, and 4.97 percent protein.

A control (sample 1) was prepared with no added dairy minerals. For the other samples, dairy minerals were added to the cream cheese at 0.25 percent (sample 2), 0.5 percent (sample 3), and 1.0 percent (sample 4) by weight of the cream cheese product.

The textures of the cream cheese products were similar based on sensory assessment. The control sample was characterized by bitter notes and typical cream cheese flavor and texture. Sample 2 was characterized by more flavor, more sour notes, no bitter notes, fresh notes, and more overall dairy flavor. Sample 3 was characterized by no bitter notes, fresh notes, and had more overall dairy flavor. Sample 4 was characterized by slightly bitter notes and savory notes but was slightly off-balanced in flavor. Samples 2 and 3 were preferred. The addition of 1 percent dairy minerals to sample 4 was deemed to be too high. Overall, it was found that the addition of dairy minerals decreased the bitter notes and increased the overall dairy flavor of the cream cheese products.

### Cream Cheese with 14% Fat

In the first experiment, dairy minerals were added to cream cheese having 14 percent fat. The cream cheese was prepared by mixing 14.1 percent cream and 85.9 percent skim milk. The mixture was treated with a lactic acid culture and processed according to conventional cream cheese techniques to provide a curd. The curd (99.675 percent) was combined with 0.075 percent sorbic acid and 0.25 percent locust bean gum and processed to produce the cream cheese. The cream cheese included 14.1 percent fat, 15.3 percent total solids, 0.19 percent salt, and 8.1 percent protein.

A control (sample 1) was prepared with no added dairy minerals. For the other samples, dairy minerals were added at 0.25 percent (sample 2), 0.5 percent (sample 3), and 1.0 percent (sample 4) by weight of the cream cheese product.

The control sample was characterized by balanced flavor typical of low fat cream cheese products. Sample 2 was characterized by more savory flavors, less sour flavor, and more creamy mouthfeel, more rounded flavor, and longer finish. Sample 3 was found to not have as much flavor as sample 2 but was otherwise generally similar to sample 2. Sample 4 was characterized by more muted flavor, sweaty and sour milk flavors, and was thin and less creamy. Overall, it was found that the samples became more savory and less sour with the addition of dairy minerals. Compared with the control, sample 2 had a more creamy mouthfeel and was less chalky. Chalky texture is a common negative attribute of low fat products. Again, 1.0 percent mineral addition appeared to be too high.

### Cream Cheese with 10% Fat

Cream cheese products containing added dairy minerals were prepared using a 10 percent fat cream cheese base prepared as described in Example 2.

A control (sample 1) was also prepared with no added dairy minerals. For the other samples, dairy minerals were added at 0.25 percent (sample 2), 0.375 percent (sample 3), and 0.5 percent (sample 4) by weight of the cream cheese product.

The control sample was characterized by sour, astringent, and milky flavors as well as a chalky mouthfeel. Sample 2 was characterized by creamy flavor, milky flavor, fast breakdown of flavors with a bite at the end, salty upfront flavor and slightly less sour upfront, and low buttery flavor but some buttery flavor at the end. Sample 3 had cooked milk flavor, slightly sweet flavor, some buttery, and savory flavor, and was less sour than the control. Both samples 2 and 3 were less astringent than the control. Sample 4 was sour but less sour than the control, had a higher salty impression, good texture, no astringency, and had buttery, milky, almost cheesy, and well balanced flavors. Overall, the addition of dairy minerals decreased sourness and astringency compared to the control.

### Example 2

Cream cheese products having about 10 percent fat were prepared with 0 percent dairy minerals ("control sample 1"), 0.5 percent dairy minerals ("samples 2 and 4"), and 0.75 percent dairy minerals ("sample 3") by varying the process steps in which the dairy minerals were added to the products. The dairy minerals used were TRUCAL® Mineral Blend.

The cream cheese products were prepared as follows:
(1) mix about 96.8 percent milk (3.88 percent fat, 3.45 percent protein, 4.94 percent lactose, 12.98 percent total solids, 9.11 percent non-fat solids) and about 3.1 percent cream (39.63 percent fat, 1.96 percent protein, 45.31 percent total solids, and 5.38 percent non-fat solids) to form a first dairy mixture (targeting fat to protein ratio of about 1.429 and protein to fat ratio of about 0.7);
(2) preheat the first dairy mixture to 60-63°C (140-145°F);
(3) heat to 81°C (178°F) and hold for 18 seconds to pasteurize the first dairy mixture;
(4) cool the first dairy mixture to 22°C (72°F);
(5) add lactic acid culture to the cooled dairy mixture;
(6) culture for about 14 to about 16 hours until target pH of 4.6 to form a cultured dairy mixture;
(7) concentrate the cultured dairy mixture using ultrafiltration (Abcor UF) and standardize to about 25 percent solids (concentration ratio: 2.5X) to form a cultured retentate;
(8) add functionalized whey protein concentrate to cultured retentate to form a second dairy mixture;
(9) heat the second dairy mixture to 68°C (155°F);
(10) add salt, gums, and dairy minerals to the second dairy mixture according to Table 1 below to form a third dairy mixture;
(11) heat the third dairy mixture to 91°C (195°F) in Breddo mixer;
(12) homogenize the third dairy mixture at about 5000 psi (single stage) to form a homogenized dairy mixture; and
(13) transfer the homogenized dairy mixture to creaming tank at 91°C (195°F) and hold for 60 minutes or less until reach target Haake of 50-80 pa to form the cream cheese product.

The dairy minerals were added to samples 2 and 3 after the homogenization step. The dairy minerals were added to sample 4 in the initial mixing step. The cream cheese products are characterized in Table 2 below.

**Table 1.**

| **Component** | **Control (%)** | **Samples 2 and 4 (%)** | **Sample 3 (%)** |
|---|---|---|---|
| UF retentate | 78.1 | 78.1 | 78.1 |
| Functional whey protein concentrate | 20.0 | 20 | 20 |
| Sorbic acid | 0.05 | 0.05 | 0.05 |
| Salt | 0.80 | 0.79 | 0.79 |
| Carrageenan | 0.34 | 0.34 | 0.34 |
| Xanthan | 0.17 | 0.17 | 0.17 |
| TRUCAL®Mineral Blend | 0 | 0.5 | 0.75 |
| Total | 100.0 | 100.0 | 100.0 |

**Table 2.**

| | Sample 1 (Control) | Sample 2 | Sample 3 | Sample 4 |
|---|---|---|---|---|
| Calcium (mg/100g) | 180.0 | 299.0 | 349.0 | 300.0 |
| Iron (mg/100g) | 0.23 | 0.29 | 0.21 | 0.24 |
| Magnesium (mg/100g) | 16.5 | 26.8 | 31.8 | 26.1 |
| Phosphorus (mg/100g) | 141.0 | 220.0 | 263.0 | 214.0 |
| Potassium (mg/100g) | 175.0 | 148.0 | 155.0 | 149.0 |
| Sodium (mg/100g) | 365.0 | 349.0 | 362.0 | 357.0 |
| Protein factor | 6.38 | 6.38 | 6.38 | 6.38 |
| Dairy minerals (%) | 0 | 0.5 | 0.75 | 0.5 |
| Protein (%) | 8.67 | 8.57 | 8.78 | 8.61 |
| Moisture (%) | 72.17 | 72.74 | 72.61 | 72.99 |
| Fat (%) | 11.01 | 10.67 | 10.35 | 10.57 |
| Total salt (%) | 1.02 | 0.97 | 0.94 | 0.94 |
| Lactose (%) | 4.96 | 4.64 | 4.64 | 4.47 |
| pH | 4.71 | 4.87 | 4.91 | 4.85 |

The products were tasted by an expert team tasting panel. Generally, the samples with added dairy minerals had decreased astringency and chalkiness, enhanced lubricity, and an increase in overall fresh milky/cheesy flavor notes. The samples with added dairy minerals were deemed to have more "fresh" flavor.

More specifically, the team found that the control was less chalky than samples 2 and 3, had more cheesy notes (note, however, that a prominent cheesy flavor can be a negative attribute when not balanced by other dairy flavors), less buttery flavor than sample 3 but better than sample 2. Sample 2 was characterized by cooked milky notes with slight astringent flavor, with a slow rate of breakdown and firm texture. Sample 3 was softer, acidic flavor with chalky notes, less cooked flavor but more milky and butter flavoring, and a little more salty than control and similar to sample 2. Sample 4 was creamy and cooked flavor like sample 2, was less sour than samples 1 and 3, and had some residual bitterness. Overall, sample 3 was preferred.

### Comparative Example 3

Sliced 2% Milk White American processed cheese was prepared containing 0 percent or 1.5 percent added dairy minerals. The processed cheese was prepared by combining the ingredients provided in Table 3 below.

**Table 3**

| | Control | Sample with 1.5% Dairy Minerals |
|---|---|---|
| Natural and enzyme-modified cheese (%) | 33.2 | 33.2 |
| Anhydrous milkfat (%) | 1.0 | 1.0 |
| Vitamin A (%) | 0.002 | 0.002 |
| Vitamin D (%) | 0.031 | 0.031 |
| Process water (%) | 37.3 | 36.0 |
| Dried cheese whey (%) | 7.7 | 7.7 |
| Milk protein concentrate (%) | 14.8 | 14.8 |
| Tricalcium phosphate (%) | 1.5 | 1.5 |
| Dairy minerals (TRUCAL D7) (%) | 0 | 1.5 |
| Sorbic acid (%) | 0.18 | 0.18 |
| Disodium phosphate-duohydrate (%) | 0.55 | 0.55 |
| Gelatin (%) | 1.0 | 1.0 |
| Sodium citrate (%) | 2.0 | 2.0 |
| Cube salt (%) | 0.41 | 0.27 |
| Lactic acid 88% fermented (%) | 0.25 | 0.25 |

The liquid and powdered ingredients were first mixed and then combined with the cheese raw ingredients and blended to make a homogenous mixture. The mixture is then cooked according to conventional processed cheese manufacture, and then cooled and packed.

The cheese was then analyzed for flavor release. The cheese was divided into two experimental sets: one set analyzed after storage in a refrigerator (hereinafter "cold application") and another set analyzed after being melted in a microwave oven (hereinafter "hot application"). Both sets were tested as is or in the form of a bolus after 20 chews by a food scientist.

Three groups of compounds were analyzed by Proton-Transfer-Reaction Mass spectrometry (PTR-MS) flavor release measurement. Volatile compounds were measured by the special mass ions (MW+1) generated through protonization.

The measurement was carried out as follows:
Cold application as-is headspace: representing what aroma compounds will be smelled by consumers at cold condition before consumption.

15 grams of processed cheese was folded and placed in 57 g (2-oz) sample cup with lid and then stored in the refrigerator. The total exposed surface area was controlled by folding slice into 1"x1" dimension.

Sample was taken out to room temperature 5 min before PTR-MS analysis.

Insert the inlet volatile tubing through sample cup lid and the released headspace volatiles were collected for 2-min period and analyzed by PTR-MS.

Cold application bolus headspace: representing what aroma compounds will be release by bolus during consumption.

15 grams of processed cheese was folded and placed in 57 g (2-oz) sample cup with lid and then stored in the refrigerator. The total exposed surface area was controlled by folding slice into 1"x1" dimension.

Sample was taken out to room temperature 5 min before PTR-MS analysis.

Chew the processed cheese sample chunks for 20 sec and the bolus was spit back to sample cup and covered with lid.

Insert the inlet volatile tubing through sample cup lid and the released headspace volatiles were collected for 2-min period and analyzed by PTR-MS.

Hot application as-is headspace: representing what aroma compounds will be smelled by consumers after cheese melt.

Whole slice of processed cheese (∼20 gram) was placed in 227 g (8-oz) sample cup with lid and then microwaved (1100 Watt) for 10 sec.

Sample was taken out to room temperature 5 min before PTR-MS analysis.

Insert the inlet volatile tubing through sample cup lid and the released headspace volatiles were collected for 2-min period and analyzed by PTR-MS.

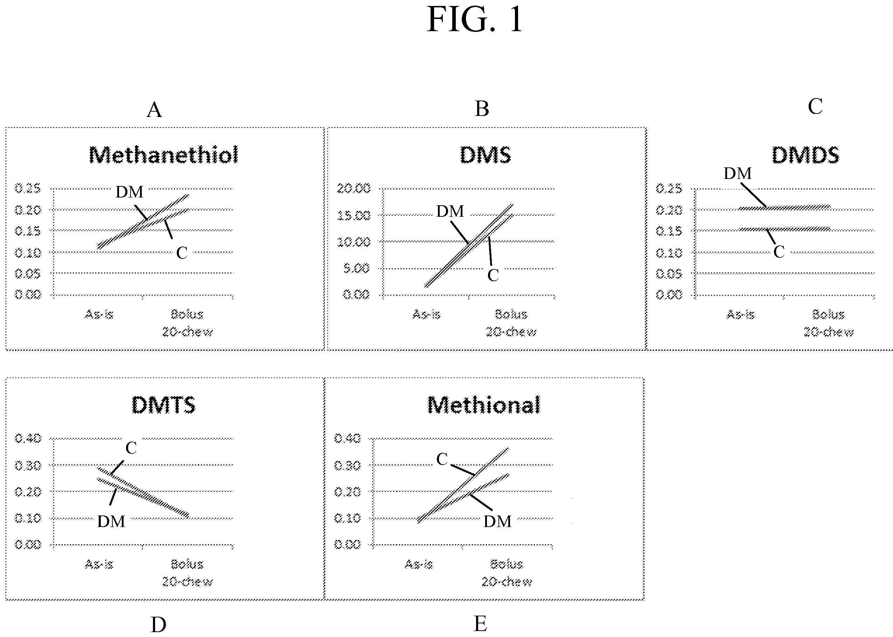

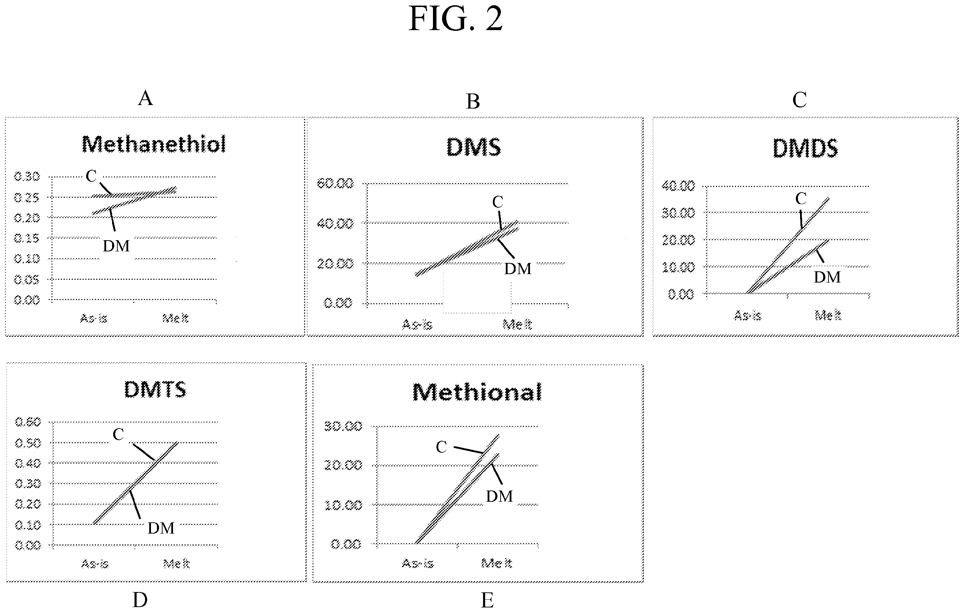

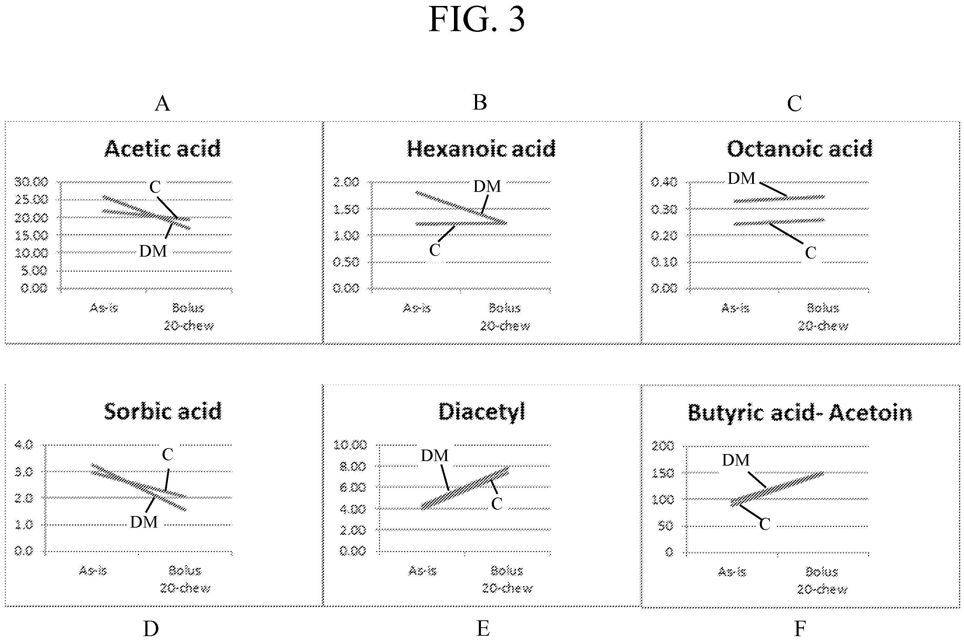

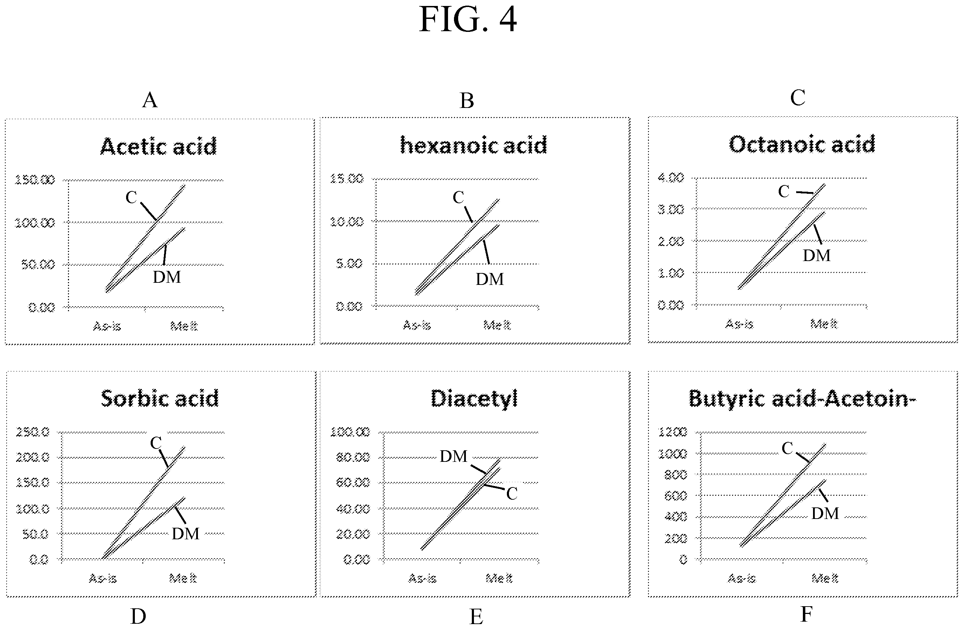

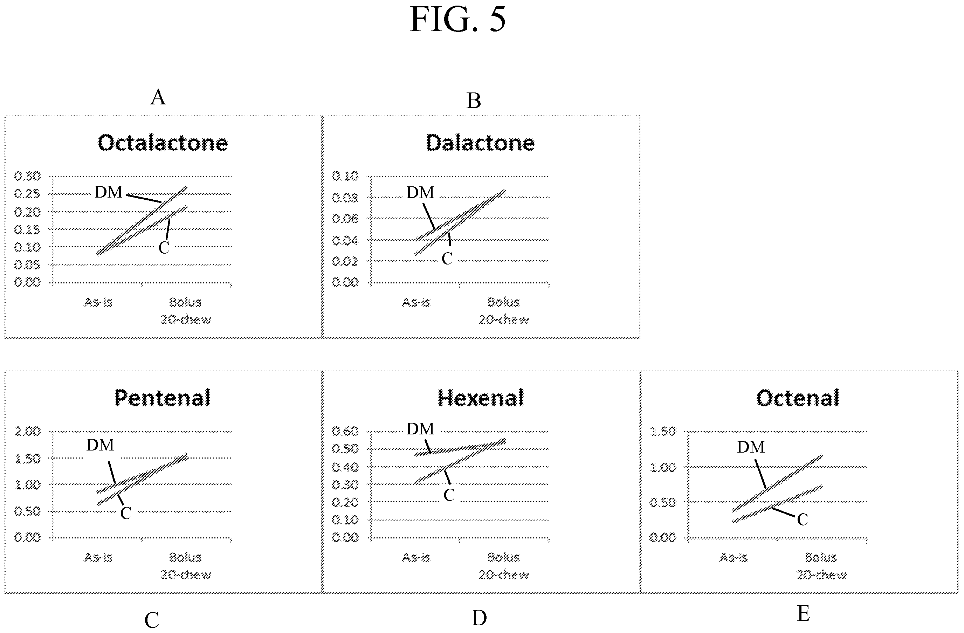

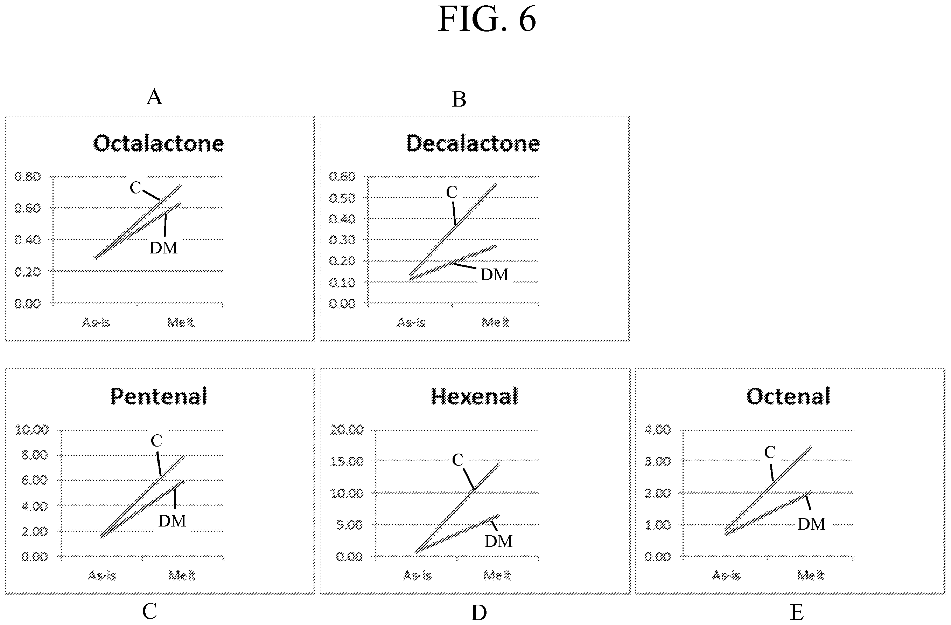

Three groups of compounds were monitored:
1) sulfur compounds as shown in FIG. 1A-E (cold application) and FIG. 2A-E (hot application): methanethiol (CH₅S⁺), DMS (C₂H₇S⁺), DMDS (C₂H₇S₂⁺), methional (C₄H₉OS⁺), and DMTS (C₂H₇S₃⁺);
2) free fatty acids and buttery compounds as shown in FIG. 3A-F (cold application) and FIG. 4A-F (hot application): acetic acid, hexanoic acid, octanoic acid, sorbic acid, diacetyl, and butyric acid/acetoin; and
3) lactones and unsaturated aldehydes as shown in FIG. 5A-E (cold application) and FIG. 6A-E (hot application): octalactone, decalactone, pentenal, hexenal, and octenal.

The selection of compounds for this analysis was made based on knowledge in the art regarding key aroma compounds for processed cheese products.

In the cold application, it was found that the addition of dairy minerals resulted in slightly higher flavor release for most of the cheese volatile compounds. The cheese was characterized as having higher cheese flavor.

In the hot application, it was found that addition of dairy minerals resulted in slightly lower flavor release for most of the cheese volatile compounds. The cheese was characterized as having low cheese flavor. While not wishing to be limited by theory, it is believed that the difference in flavor release between the cold and hot applications may indicate that flavors were lost as volatiles during the heating process for the hot application, thereby appearing to have lower flavor release when the samples were analyzed after the heating step.

### Example 4

Cream cheese having 10 percent fat content was prepared with and without 0.75 percent added dairy minerals as generally described in Example 2 with the dairy minerals added at the end of the process before a final mixing step (i.e., sample 3). The cheese was then analyzed for flavor release after storage for approximately 1 month in a refrigerator.

Three groups of compounds were analyzed by Proton-Transfer-Reaction Mass spectrometry (PTR-MS) flavor release measurement. Volatile compounds were measured by the special mass ions (MW+1) generated through protonization.

The measurement was carried out as follows:
As-is headspace: representing what aroma compounds will be smelled by consumers before consumption.
1. 15 grams of cream cheese was placed in 57 g (2-oz) sample cup with lid and then stored in the refrigerator.
2. Sample was taken out to room temperature 5 min before PTR-MS analysis.
3. Insert the inlet volatile tubing through sample cup lid and the released headspace volatiles were collected for 2-min period and analyzed by PTR-MS.

Bolus headspace: representing what aroma compounds will be release by bolus during consumption.
1. 15 grams of cream cheese was placed in 57 g (2-oz) sample cup with lid and then stored in the refrigerator.
2. Sample was taken out to room temperature 5 min before PTR-MS analysis.
3. Chew the cream cheese chunk for 20 sec and the bolus was spit back to sample cup and covered with lid.
4. Insert the inlet volatile tubing through sample cup lid and the released headspace volatiles were collected for 2-min period and analyzed by PTR-MS.

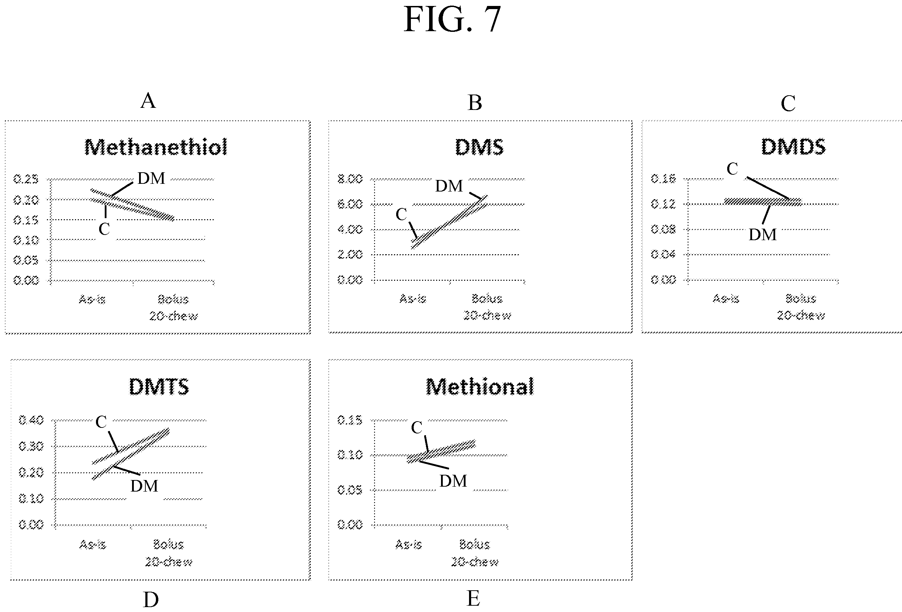

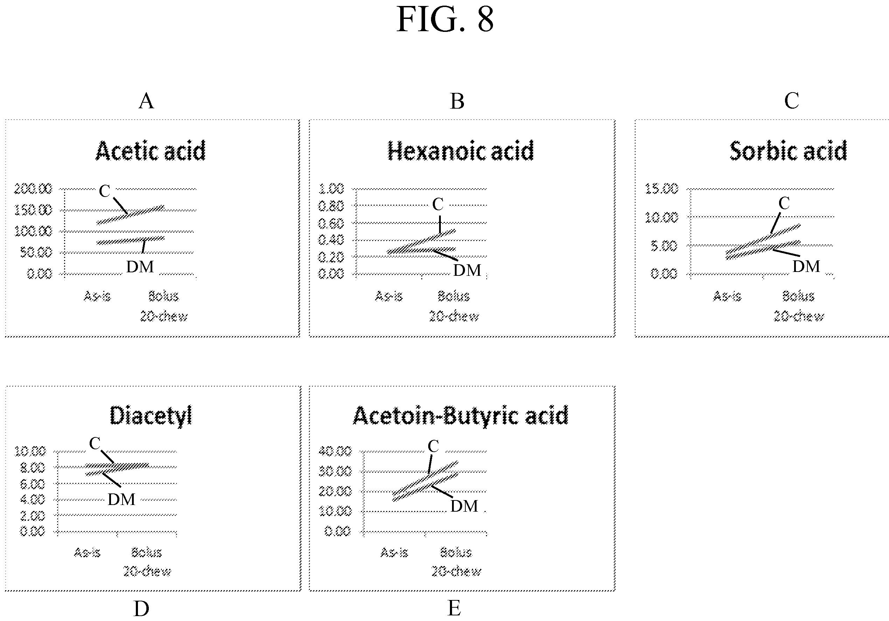

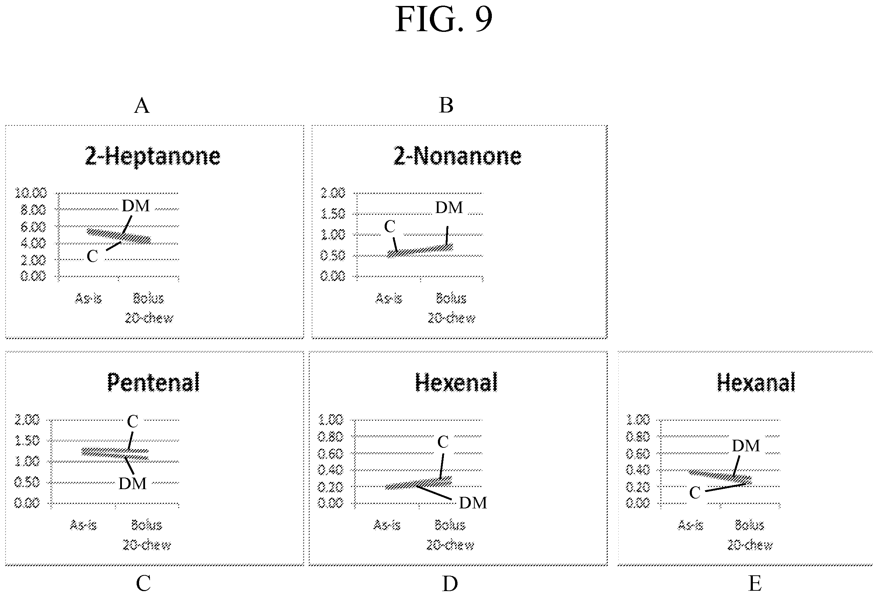

The compounds analyzed are listed below:
1) sulfur compounds as shown in FIG. 7A-E: methanethiol, DMS (C₂H₇S⁺), DMDS (C₂H₇S₂⁺), methional, and DMTS (C₂H₇S₃⁺);
2) free fatty acids and buttery compounds as shown in FIG. 8A-E: acetic acid, hexanoic acid, sorbic acid (C₆H₉O₂⁺), diacetyl, and acetoin/butyric acid; and
3) methyl ketones and unsaturated aldehydes as shown in FIG. 9A-E: 2-heptanone, 2-nonanone, pentenal, hexenal, and hexanal.

The selection of compounds for this analysis was made based on knowledge in the art regarding key aroma compounds for cream cheese products.

The addition of the dairy minerals appears to result in slightly lower flavor release for most of the cheese volatile compounds.

### Example 5

Cream cheese products having about 10 percent fat was prepared with and without 0.5 percent added dairy minerals (Glanbia TRUCAL®D7). The cream cheese products were prepared as generally described in Example 2.

The cream cheese products are described in Table 4 below.

**Table 4.**

| | Control Sample (0% added dairy minerals) | Experimental Sample (0.5% added dairy minerals) |
|---|---|---|
| Calcium (mg/100g) | 195.0 | 325.0 |
| Iron (mg/100g) | 0.21 | 0.24 |
| Magnesium (mg/100g) | 14.7 | 23.9 |
| Phosphorus (mg/100g) | 132.0 | 203.0 |
| Potassium (mg/100g) | 137.0 | 134.0 |
| Protein factor | 6.38 | 6.38 |
| Protein (%) | 8.50 | 8.18 |
| Moisture (%) | 73.72 | 74.29 |
| Fat (%) | 10.28 | 9.82 |
| Salt (%) | 0.98 | 0.95 |
| Lactose (%) | 5.08 | 4.86 |
| pH | 4.74 | 4.92 |

The cream cheese was tasted by a team of food scientists. The control without added dairy minerals was characterized as follows: salty note, buttery and cream like, more sour and tangy finish. The control had light astringency with more whey flavor.

The cream cheese with 0.5 percent added dairy minerals was characterized as follows: sweeter finish, more balanced flavors, increased cream cheese flavor, less sourness and chalky.

### Example 6

The use of added dairy minerals was further explored in a low fat cream cheese system to determine the impact of adding 0.5 percent dairy minerals on flavor and texture. The cream cheese products were prepared generally as described in Example 2 and added at the end of the process before the final mixing.

The content of the cream cheese products is shown in Table 5 below.

**Table 5**

| **Component** | **Control (%)** | **Experimental With Dairy Minerals (%)** |
|---|---|---|
| Calcium (mg/100g) | 195.0 | 325.0 |
| Iron (mg/100g) | 0.21 | 0.24 |
| Magnesium (mg/100g) | 14.7 | 23.9 |
| Phosphorus (mg/100g) | 132.0 | 203.0 |
| Potassium (mg/100g) | 137.0 | 134.0 |
| Protein factor | 6.38 | 6.38 |
| Protein (%) | 8.50 | 8.18 |
| Moisture (%) | 73.7 | 74.3 |
| Fat (%) | 10.28 | 9.82 |
| Salt (%) | 0.98 | 0.95 |
| Lactose (%) | 5.08 | 4.86 |
| pH | 4.74 | 4.92 |

The cream cheese products were tasted by a team of food scientists. The control was characterized by salty note, buttery and creamy flavor, more sour and whey flavor, tangy finish, and light astringency.

The sample with 0.5 percent dairy minerals had a sweeter finish, more balanced flavors, increased cream cheese flavor, less sourness, and less chalky.

### Comparative Example 7

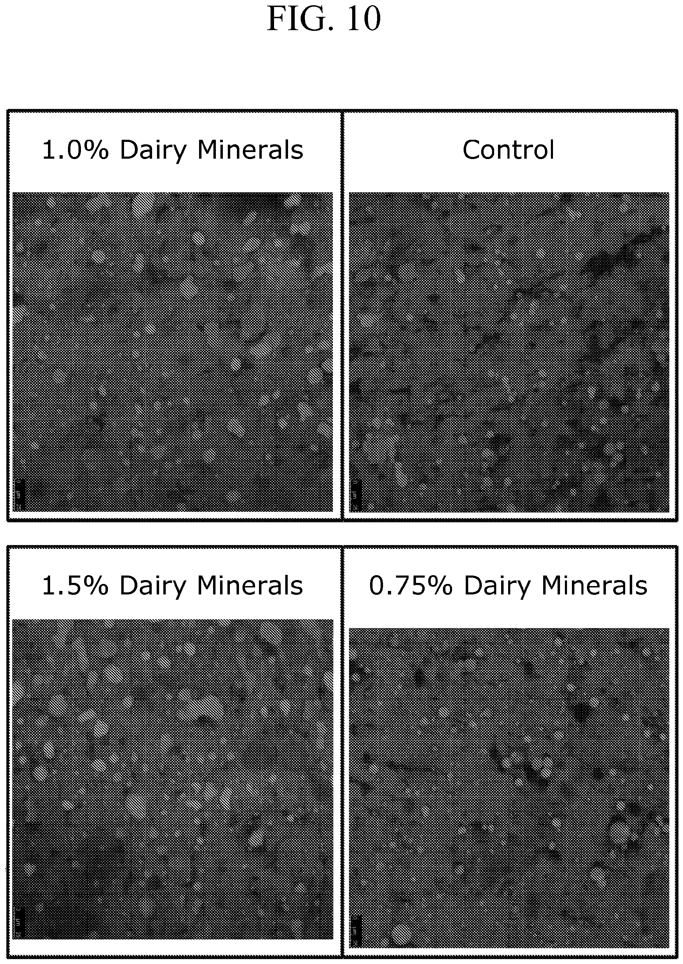

2% milk white American processed cheese was prepared with the addition of dairy minerals at 0 percent, 0.75 percent, 1.0 percent, and 1.5 percent and then analyzed by confocal microscopy as shown in FIG. 10. The recipe for the cheese is presented in Table 6 below and similar methodology was followed as described in Example 3.

**Table 6**

| | Control | Sample with 0.75% Dairy Minerals | Sample with 1% Dairy Minerals | Sample with 1.5% Dairy Minerals |
|---|---|---|---|---|
| Natural and enzyme-modified cheese (%) | 33.2 | 33.2 | 33.2 | 33.2 |
| Anhydrous milkfat (%) | 1.0 | 1.0 | 1.0 | 1.0 |
| Vitamin A (%) | 0.002 | 0.002 | 0.002 | 0.002 |
| Vitamin D (%) | 0.031 | 0.031 | 0.031 | 0.031 |
| Process water (%) | 37.3 | 36.7 | 36.5 | 36.0 |
| Dried cheese whey (%) | 7.7 | 7.7 | 7.7 | 7.7 |
| Milk protein concentrate (%) | 14.8 | 14.8 | 14.8 | 14.8 |
| Tricalcium phosphate (%) | 1.5 | 1.5 | 1.5 | 1.5 |
| Dairy minerals (TRUCAL D7) (%) | 0 | 0.75 | 1.0 | 1.5 |
| Sorbic acid (%) | 0.18 | 0.18 | 0.18 | 0.18 |
| Disodium phosphate-duohydrate (%) | 0.55 | 0.55 | 0.55 | 0.55 |
| Gelatin (%) | 1.0 | 1.0 | 1.0 | 1.0 |
| Sodium citrate (%) | 2.0 | 2.0 | 2.0 | 2.0 |
| Cube salt (%) | 0.41 | 0.31 | 0.29 | 0.27 |
| Lactic acid 88% fermented (%) | 0.25 | 0.25 | 0.25 | 0.25 |

The 0.75 percent dairy mineral sample had an emulsion, protein microstructure, and lipid size consistent with control. Both the 1.0 percent and 1.5 percent dairy mineral samples have larger lipid size than the control and 0.75 percent sample, which indicates that the emulsion has been affected by the addition of the dairy minerals.

### Comparative Example 8

2% milk White American processed cheese having 0 percent, 0.75 percent, 1.0 percent, and 1.5 percent dairy minerals prepared according to Example 7 were tasted by a team. The samples were tasted "cold" (refrigeration temperature) or "hot" (after combining the cheese with bread and preparing a grilled cheese sandwich). Differences in flavor generally are more easily determined in cold samples. The hot samples were prepared to further confirm some of the noted differences from the cold samples. The results are presented in Table 7 below.

**Table 7**

| | Cold Slice | Hot Sandwich |
|---|---|---|
| Control | Most "whey-like" slice. Cardboard aftertaste. Chalky. Powdery. Low flavor. Most buttery. Stuck to wrapper. Thin slice. | Cardboard still present. Low cheesy flavor. Weak body. Soaked in bread. Low creaminess. |
| 2% White American + 0.75 percent dairy minerals | No whey flavor present. Sticky, soft, milk, milky, mild cheesy (mild cheesy is a good attribute), late cheese. | Sweet finish at the end, creamy, chalky texture, smooth. |
| 2% White American + 1 percent dairy minerals | No whey flavor present. Cheese late. Sweet at the beginning. Less flavor than the 0.75 percent sample. Bitter at the end. Texture broke down like singles into small pieces. Metallic/sorbic taste. Powdery aftertaste. | Least sweet sample when hot. |
| 2% White American + 1.5 percent dairy minerals | Some presence of the whey flavor. Firmest (thickest slice). Powdery/chalky flavor. Strong cheese. Mealy/grainy texture in mouth. Broke down into smaller pieces. | Low/medium cheese flavor. |

### Comparative Example 9

Dairy minerals (TRUCAL®D7) were added to Philadelphia Cooking Creme (Kraft Foods) to determine if the dairy materials impact the taste of this type of dairy product. Prior to addition of dairy minerals, the Cooking Creme included 6.25g protein, 521.4 mg sodium, 163.5 mg potassium, 104.6 mg calcium, 0.05 mg iron, and 103.5 mg phosphorus per 100 gram sample.

The Cooking Creme was heated to 32°C (90°F) and then dairy minerals (TRUCAL®D7) were stirred in at either 0.5 percent or 1.0 percent by weight. A control with no added dairy minerals was also prepared. The samples were tasted by a team of food scientists.

The team characterized the flavor of the control sample as dairy, sour, buttery, and mild cultured. The flavor of the 0.5 percent dairy mineral sample was characterized as stronger dairy than control, more overall flavor, and less sour. The flavor of the 1.0 percent dairy mineral sample was characterized as stronger dairy, slight metallic, and less cultured. Overall, the sample with 0.5 percent dairy minerals was found to be superior to the control but less preferred relative to the 1.0 percent due to the presence of some off notes.

It will be understood that various changes in the details, materials, and arrangements of the process, formulations, and ingredients thereof, which have been herein described and illustrated in order to explain the nature of the method and resulting mineral-fortified dairy products, may be made by those skilled in the art within the principle and scope of the embodied method as expressed in the appended claims.

## Claims

1. A dairy product fortified with dairy minerals, the dairy product comprising a dairy base and dairy minerals, the dairy base comprising at least one of milk, cream, milk protein concentrate, whey protein concentrate, milk fat, and cheese,
wherein the dairy product is a cream cheese and the dairy minerals are included in an amount effective to provide the following_ratios of mineral to total protein:
0.0282 mg to 0.0505 mg calcium per mg protein; and
0.0024 mg to 0.0038 mg magnesium per mg protein.

2. A method of preparing a dairy product fortified with dairy minerals, the method comprising
adding dairy minerals to a dairy base to form a dairy mixture and treating the dairy mixture to provide a dairy product, the dairy base comprising at least one of milk, cream, milk protein concentrate, whey protein concentrate, milk fat, and cheese, wherein the dairy product is a cream cheese and the dairy minerals are included in an amount effective to provide the following ratios of mineral to total protein:
0.0282 mg to 0.0505 mg calcium per mg protein; and
0.0024 mg to 0.0038 mg magnesium per mg protein.

3. The method of claim 2, wherein treating the dairy minerals and dairy base comprises:
homogenizing a dairy base;
adding a cream cheese culture to the heated homogenized dairy base and culturing for a time effective to form a cultured dairy base; and
homogenizing the cultured dairy base to form the cream cheese.

## Patentansprüche

1. Milchprodukt, das mit Milchmineralien angereichert ist, wobei das Milchprodukt eine Milchbasis und Milchmineralien umfasst, wobei die Milchbasis mindestens eines von Milch, Sahne, Milchproteinkonzentrat, Molkenproteinkonzentrat, Milchfett und Käse umfasst,
wobei das Milchprodukt ein Frischkäse ist und die Milchmineralien in einer wirksamen Menge eingeschlossen sind, um die folgenden Verhältnisse von Mineral zu Gesamtprotein bereitzustellen:
0,0282 mg bis 0,0505 mg Calcium pro mg Protein; und
0,0024 mg bis 0,0038 mg Magnesium pro mg Protein.

2. Verfahren zum Herstellen eines Milchprodukts, das mit Milchmineralien angereichert ist, wobei das Verfahren Folgendes umfasst
Zugeben von Milchmineralien zu einer Milchbasis, um eine Milchmischung zu bilden, und Behandeln der Milchmischung, um ein Milchprodukt bereitzustellen, wobei die Milchbasis mindestens eines von Milch, Sahne, Milchproteinkonzentrat, Molkenproteinkonzentrat, Milchfett und Käse umfasst, wobei das Milchprodukt ein Frischkäse ist und die Milchmineralien in einer wirksamen Menge eingeschlossen sind, um die folgenden Verhältnisse von Mineral zu Gesamtprotein bereitzustellen:
0,0282 mg bis 0,0505 mg Calcium pro mg Protein; und
0,0024 mg bis 0,0038 mg Magnesium pro mg Protein.

3. Verfahren nach Anspruch 2, wobei das Behandeln der Milchmineralien und der Milchbasis Folgendes umfasst:
Homogenisieren einer Milchbasis;
Zugeben einer Frischkäsekultur zu der erwärmten homogenisierten Milchbasis und Kultivieren für eine wirksame Zeit, um eine kultivierte Milchbasis zu bilden; und
Homogenisieren der kultivierten Milchbasis, um einen Frischkäse zu bilden.

## Revendications

1. Produit laitier enrichi en minéraux laitiers, le produit laitier comprenant une base laitière et des minéraux laitiers, la base laitière comprenant au moins un parmi le lait, la crème, le concentré de protéine de lait, le concentré de protéine de lactosérum, la matière grasse de lait, et le fromage,
dans lequel le produit laitier est une crème de fromage et les minéraux laitiers sont inclus en une quantité efficace pour fournir les rapports suivants de minéral sur protéine totale :
0,0282 mg à 0,0505 mg de calcium par mg de protéine ; et
0,0024 mg à 0,0038 mg de magnésium par mg de protéine.

2. Procédé de préparation d'un produit laitier enrichi en minéraux laitiers, le procédé comprenant
l'ajout de minéraux laitiers à une base laitière pour former un mélange laitier et traiter le mélange laitier pour fournir un produit laitier, la base laitière comprenant au moins l'un parmi le lait, la crème, le concentré de protéine de lait, le concentré de protéine de lactosérum, la matière grasse de lait, et le fromage, dans lequel le produit laitier est une crème de fromage et les minéraux laitiers sont inclus dans une quantité efficace pour fournir les rapports suivants de minéral sur protéine totale :
0,0282 mg à 0,0505 mg de calcium par mg de protéine ; et
0,0024 mg à 0,0038 mg de magnésium par mg de protéine.

3. Procédé selon la revendication 2, dans lequel le traitement des minéraux laitiers et de la base laitière comprend :
l'homogénéisation d'une base laitière ;
l'ajout d'une culture de crème de fromage à la base laitière homogénéisée chauffée et la mise en culture pendant une période de temps efficace pour former une base laitière de culture ; et
l'homogénéisation de la base laitière de culture pour former la crème de fromage.
